(19) Europäisches Patentamt
European Patent Office
Office européen des brevets

(11) Veröffentlichungsnummer : **0 031 572**
**B1**

(12) # EUROPÄISCHE PATENTSCHRIFT

(45) Veröffentlichungstag der Patentschrift : **22.06.83**

(51) Int. Cl.³ : **C 09 B 29/15**, C 10 L 1/22, C 10 M 1/32

(21) Anmeldenummer : **80108100.1**

(22) Anmeldetag : **22.12.80**

(54) **Lösliche Farbstoffe und ihre Verwendung zum Färben von Mineralölprodukten, Fetten und Wachsen.**

(30) Priorität : **29.12.79 DE 2952759**

(43) Veröffentlichungstag der Anmeldung : **08.07.81 Patentblatt 81/27**

(45) Bekanntmachung des Hinweises auf die Patenterteilung : **22.06.83 Patentblatt 83/25**

(84) Benannte Vertragsstaaten : **BE CH DE FR GB IT LI NL**

(56) Entgegenhaltungen :
**BE A 685 774**
**DE C 154 871**
**FR A 1 127 885**
**FR A 2 013 809**

**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Armbrust, Herbert**
**Joh.-Sebastian-Bach-Strasse 6**
**D-6718 Gruenstadt (DE)**
Erfinder : **Hansen, Guenter, Dr.**
**Alwin-Mittasch-Platz 8**
**D-6700 Ludwigshafen (DE)**
Erfinder : **Zeidler, Georg**
**Mutterstadter Strasse 7**
**D-6701 Dannstadt-Schauernheim 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 031 572 B1

Lösliche Farbstoffe und ihre Verwendung zum Färben von Mineralölprodukten, Fetten und Wachsen

Die Erfindung betrifft die Verbindungen der Formel I

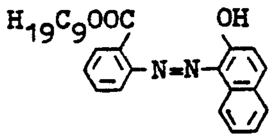

(I)

in der die Gruppe $C_9H_{19}$ ein Gemisch verschiedener isomerer, vorzugsweise verzweigter Reste ist.

Die $C_9H_{19}$-Reste stammen von $C_9H_{19}$-Alkoholen, die durch Oxoreaktion aus $C_8$-Olefinen hergestellt werden. Es liegt wahrscheinlich ein Gemisch aller möglichen isomeren $C_9H_{19}$-Reste vor.

Zur Herstellung der Verbindungen der Formel I kann man eine Diazoverbindung von dem Amingemisch der Formel

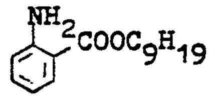

mit β-Naphthol kuppeln.

Einzelheiten der Umsetzung können dem Beispiel entnommen werden, in dem sich Teile und Prozente auf das Gewicht beziehen.

Das Isomerengemisch der Formel I zeichnet sich durch eine überragende Löslichkeit in Mineralölprodukten, Kohlenwasserstoffen, Fetten und Wachsen aus und ist daher vorzüglich zum Färben dieser Substrate geeignet. Vorzugsweise werden die Verbindungen der Formel I als Lösung in Toluol oder einem Kohlenwasserstoffgemisch (z. B. Shellsol ® AB) verwendet, wobei die Konzentration des Farbstoffes vorzugsweise 30 bis 60 % beträgt.

« Gegenüber dem aus der FR-A-1 127 885, Tabelle VIII, N° 14 bekannten Farbstoff weisen die erfindungsgemäßen Gemische unerwartet große Vorteile in der Löslichkeit in Kohlenwasserstoffen auf, die weder nahegelegt noch vorhersehbar waren. Im Hinblick auf den Verwendungszweck sind diese Vorteile sehr wertvoll ».

## Beispiel

26,3 Teile Anthranilsäurenonylester werden in 100 Teilen Toluol gelöst und in eine Mischung aus 200 Teilen Wasser und 50 Teilen 5n-Salzsäure eingetropft. Nach Zugabe von 100 Teilen Eis diazotiert man mit einer konzentrierten, wäßrigen Lösung von 6,9 Teilen Natriumnitrit. Die Diazotierung ist im Verlauf von 30 Minuten bei 0-5 °C beendet ; man entfernt darauf den Nitritüberschuß wie üblich mit Amidosulfonsäure. Zur Lösung des Diazoniumsalzes tropft man anschließend bei 5-15 °C unter intensivem Rühren eine Lösung von 15,1 Teilen β-Naphthol in 110 Teilen Wasser und 4,5 Teilen Ätznatron zu. Danach wird der pH-Wert der Mischung durch Zugabe von Natrium-acetat auf 4 erhöht. Die Kupplung ist nach dem Rühren über Nacht bei Raumtemperatur beendet. Man trennt die wäßrige Phase ab, wäscht die Farbstofflösung mit $H_2O$ salzfrei und erhält nach dem Abdestillieren des Toluols 39,5 Teile eines Gemisches einer orangefarbenen Verbindung der Formel

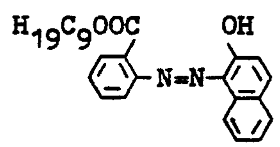

die sich zum Färben von Treibstoffen, Heizölen, Lacken, Wachsen und Fetten sehr gut eignet.

## Ansprüche

1. Lösliche Farbstoffe der Formel

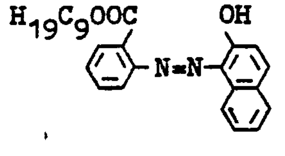

(I)

in der die Gruppe $C_9H_{19}$ ein Gemisch verschiedener isomerer Reste ist.

2. Farbstoffe gemäß Anspruch 1, wobei die Reste $C_9H_{19}$ verzweigt sind.

3. Verwendung der Farbstoffe gemäß Anspruch 1 und 2 zum Färben von Mineralölprodukten, Fetten oder Wachsen.

**Claims**

1. A soluble dye of the formula

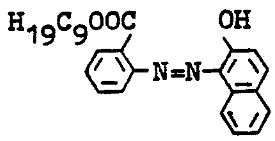

(I)

where the $C_9H_{19}$ group is a mixture of various isomeric radicals.

2. A dye as claimed in claim 1, wherein the $C_9H_{19}$ radicals are branched.

3. The use of a dye as claimed in claim 1 or 2 for colouring mineral oil products, greases or waxes.

**Revendications**

1. Colorants solubles de formule

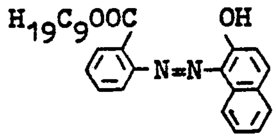

(I)

dans laquelle le groupe $C_9H_{19}$ est un mélange de différents radicaux isomères.

2. Colorants selon la revendication 1, dans lesquels les radicaux $C_9H_{19}$ sont ramifiés.

3. Utilisation des colorants selon la revendication 1 ou 2 pour la coloration de produits pétroliers, de graisses ou de cires.